(19) Europäisches Patentamt

European Patent Office

Office européen des brevets

(11) **EP 4 421 753 A1**

(12) # EUROPEAN PATENT APPLICATION

(43) Date of publication:
**28.08.2024 Bulletin 2024/35**

(21) Application number: **24151799.4**

(22) Date of filing: **15.01.2024**

(51) International Patent Classification (IPC):
**G06V 10/56** $^{(2022.01)}$ **G06V 20/58** $^{(2022.01)}$
**G08G 1/0962** $^{(2006.01)}$

(52) Cooperative Patent Classification (CPC):
**G06V 20/584; G06V 10/56; G08G 1/09623;**
**Y02B 20/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023 CN 202310169608**

(71) Applicant: **Anhui NIO Autonomous Driving
Technology Co., Ltd.
Hefei, Anhui 230601 (CN)**

(72) Inventor: **SHI, Yafeng
Hefei, Anhui Province, 230601 (CN)**

(74) Representative: **Vossius & Partner
Patentanwälte Rechtsanwälte mbB
Siebertstrasse 3
81675 München (DE)**

(54) **TRAFFIC LIGHT PERCEPTION METHOD, VEHICLE CONTROL METHOD, DEVICE, MEDIUM, AND VEHICLE**

(57)     The disclosure relates to the field of autonomous driving, and specifically provides a traffic light perception method, a vehicle control method, a device, a medium, and a vehicle, to solve the problem of accurately sensing a status of a traffic light. For this purpose, the method provided in the disclosure includes: sensing and recognizing a current image frame of the traffic light to obtain a lamp head shape and a color of a currently lit single light in the traffic light; determining a traffic indication direction of a virtual light corresponding to the traffic light based on the lamp head shape of the single light; and determining a color of the traffic indication direction based on the color of the single light, to form a virtual light. According to the above method, a status of a traffic light can be accurately obtained without relying on a high-definition map, which improves the safety and reliability of vehicle driving.

```
                    ┌─────────┐
                    │  Start  │
                    └────┬────┘
                         │
    ┌────────────────────▼────────────────────┐
    │ Sense and recognize a current image      │── S101
    │ frame of a traffic light to obtain a      │
    │ lamp head shape and a color of a          │
    │ currently lit single light in the         │
    │ traffic light                             │
    └────────────────────┬────────────────────┘
                         │
    ┌────────────────────▼────────────────────┐
    │ Determine a traffic indication direction  │── S102
    │ of a virtual light corresponding to the   │
    │ traffic light based on the lamp head      │
    │ shape of the single light                 │
    └────────────────────┬────────────────────┘
                         │
    ┌────────────────────▼────────────────────┐
    │ Determine a color of the traffic          │── S103
    │ indication direction based on the color   │
    │ of the single light, to form a virtual    │
    │ light                                     │
    └────────────────────┬────────────────────┘
                         │
                    ┌────▼────┐
                    │   End   │
                    └─────────┘
```

*FIG. 1*

EP 4 421 753 A1

**Description**

The present application claims priority of CN patent application 202310169608.6 filed on February 27, 2023 with the title "Traffic light perception method, Vehicle control method, Device, Medium and Vehicle".

**Technical Field**

The disclosure relates to the field of autonomous driving technologies, and specifically relates to a traffic light perception method, a vehicle control method, a device, a medium, and a vehicle.

**Background Art**

Traffic lights usually consist of red, green, and yellow lights. The red light indicates stop, the green light indicates permission to pass, and the yellow light indicates warning. When autonomous driving control is performed on a vehicle, it is necessary to accurately sense statuses of the traffic lights on the road so that the vehicle can be driven and controlled safely and reliably based on the statuses of the traffic lights.

A current conventional traffic light perception method mainly includes labeling 3D positions and types of traffic lights on a high-definition map in advance, and binding information such as lanes and stop lines on a high-definition map. In a traveling process of the vehicle, 2D results of the traffic lights are first obtained through recognition by a perception model, then the 2D results are associated with the traffic lights projected from the high-definition map onto a 2D image, a color value is assigned to the traffic light, and finally, a color of a traffic light corresponding to a lane line and a stop line is queried based on a position of the vehicle, and the vehicle is controlled based on this color.

Since this method relies on high-definition maps, it can be performed only in a region covered by high-definition maps. In addition, information such as positions and types of traffic lights, and bound lane lines may change at any time, causing the information labeled on the high-definition map to be inconsistent with actual information. Consequently, it impossible to accurately obtain statuses of the traffic lights and increasing traveling risks of the vehicle.

Accordingly, there is a need for a new technical solution in the field to solve the problem described above.

**Summary**

To overcome the above defect, the disclosure is proposed to provide a traffic light perception method, a vehicle control method, a device, a medium, and a vehicle, to solve or at least partially solve the technical problem of how to accurately sense a status of a traffic light, and improve safety of vehicle driving.

According to a first aspect, there is provided a traffic light perception method, including:

sensing and recognizing a current image frame of a traffic light to obtain a lamp head shape and a color of a currently lit single light in the traffic light;
determining a traffic indication direction of a virtual light corresponding to the traffic light based on the lamp head shape of the single light; and
determining a color of the traffic indication direction based on the color of the single light, to form a virtual light.

In a technical solution of the above traffic light perception method, the step of "determining a color of the traffic indication direction based on the color of the single light, to form a virtual light" includes:

determining a color corresponding to each lamp head shape based on the color of the single light; and
determining a color of a traffic indication direction corresponding to the lamp head shape based on the color corresponding to the lamp head shape.

In a technical solution of the above traffic light perception method, the step of "determining a color corresponding to each lamp head shape based on the color of the single light" includes:

obtaining single lights of the same shape that have the same lamp head shape and that are lit in the traffic light; and
correcting a color of each of the single lights of the same shape to the same color, to determine colors corresponding to the lamp head shapes of the single lights of the same shape.

In a technical solution of the above traffic light perception method, the step of "correcting a color of each of the single lights of the same shape to the same color, to determine colors corresponding to the lamp head shapes of the single lights of the same shape" includes:

obtaining, for each of the single lights of the same shape, a confidence level that the single light shows each different color;

selecting a color with the highest confidence level from confidence levels that all of the single lights of the same shape show each different color; and

correcting the color of each of the single lights of the same shape to the color with the highest confidence level.

In a technical solution of the above traffic light perception method, the step of "obtaining, for each of the single lights of the same shape, a confidence level that the single light shows each different color" includes:

obtaining an initial confidence level that the single light shows each different color and that is obtained by sensing and recognizing the current image frame of the traffic light;

obtaining an area of a detection box of the single light and/or obtaining an included angle between a direction in which a vehicle points to the single light and a Y-axis direction in a vehicle body coordinate system; and

modifying, based on the area of the detection box and/or the included angle, the initial confidence level of each different color to obtain a final confidence level that the single light shows each color.

In a technical solution of the above traffic light perception method, the method further includes obtaining the final confidence level based on the area of the detection box and the included angle in the following manner:

calculating a product of the area of the detection box and the included angle and using the product as a gain value; and

modifying, based on the gain value, the initial confidence level of each different color to obtain the final confidence level that the single light shows each color.

In a technical solution of the above traffic light perception method, before the step of "determining a color of a traffic indication direction corresponding to the lamp head shape based on the color corresponding to the lamp head shape", the method further includes: performing, in the following manner, tracking and smoothing on a color corresponding to a lamp head shape obtained through the current image frame:

obtaining a plurality of consecutive historical image frames before the current image frame;

obtaining a color corresponding to a lamp head shape obtained through each of the historical image frames; and

voting on a color corresponding to the lamp head shape obtained through each of the current image frame and the historical image frame, and selecting a color with a largest number as a final color corresponding to the lamp head shape obtained through the current image frame.

In a technical solution of the above traffic light perception method, the step of "determining a color of a traffic indication direction corresponding to the lamp head shape based on the color corresponding to the lamp head shape" includes:

assigning a color value to a traffic indication direction corresponding to each lamp head shape according to a preset arrangement order of lamp head shapes and based on the color corresponding to each lamp head shape, so as to determine a color of a traffic indication direction corresponding to each lamp head shape.

In a technical solution of the above traffic light perception method, before the step of "assigning a color value to a traffic indication direction corresponding to each lamp head shape according to a preset arrangement order of lamp head shapes and based on the color corresponding to each lamp head shape, so as to determine a color of a traffic indication direction corresponding to each lamp head shape", the method further includes:

initializing a color of a right-turn traffic indication direction to a color that indicates permission to pass.

In a technical solution of the above traffic light perception method, after the step of "determining a color of the traffic indication direction based on the color of the single light, to form a virtual light", the method further includes: performing, in the following manner, tracking and smoothing on a color of the traffic indication direction obtained through the current image frame:

obtaining a plurality of consecutive historical image frames before the current image frame;

obtaining the color of the traffic indication direction obtained through each of the historical image frames; and

voting on a color of the traffic indication direction obtained through each of the current image frame and the historical image frame, and selecting a color with a largest number as a color of the traffic indication direction obtained through the current image frame.

In a technical solution of the above traffic light perception method, the step of "determining a traffic indication direction of a virtual light corresponding to the traffic light based on the lamp head shape of the single light" includes:

obtaining a preset correspondence between a lamp head shape and a traffic indication direction of a virtual light; and
determining the traffic indication direction of the virtual light corresponding to the traffic light based on the lamp head shape of the single light and the correspondence.

In a technical solution of the above traffic light perception method, after the step of "determining a color of the traffic indication direction based on the color of the single light, to form a virtual light", the method further includes:

obtaining a 3D position of the currently lit single light in the traffic light obtained by sensing and recognizing the current image frame of the traffic light; and
associating the virtual light with the 3D position.

According to a second aspect, there is provided a vehicle control method, the method including:

obtaining an image frame of a traffic light located in a forward direction of a vehicle;
obtaining a virtual light corresponding to the traffic light by using the traffic light perception method provided in the first aspect and based on the image frame; and
performing autonomous driving control on the vehicle based on a color of each traffic indication direction of the virtual light.

According to a third aspect, there is provided a computer device, including a processor and a storage apparatus adapted to store a plurality of pieces of program code, where the pieces of program code are adapted to be loaded and run by the processor to perform the method according to any one of the technical solutions of the above traffic light perception method.
According to a fourth aspect, there is provided a non-transitory computer-readable storage medium. A plurality of pieces of program code are stored in the computer-readable storage medium, and the pieces of program code are adapted to be loaded and run by a processor to perform the method according to any one of the technical solutions of the above traffic light perception method.
According to a fifth aspect, there is provided a vehicle, and the vehicle includes the computer device according to the above technical solution of the computer device.
The above one or more technical solutions of the disclosure have at least one or more of the following beneficial effects:
In the technical solution for implementing the traffic light perception method provided in the disclosure, first, the current image frame of the traffic light can be sensed and recognized to obtain the lamp head shape (such as a round cakes and a U-turn arrow) and the color of the currently lit single light in the traffic light, and then determine the traffic indication direction (such as straight ahead and left turn) of the virtual light corresponding to the traffic light based on the lamp head shape of the single light, and determine the color of the traffic indication direction based on the color of the single light, to form a virtual light. Through the above method, there is no need to label positions and types of traffic lights on a high-definition map in advance and bind information such as lanes and stop lines on a high-definition map. A traffic light at any position and of any type can be uniformly expressed as a virtual light formed by a traffic indication direction and its color, and it only needs to query the color of the traffic indication direction from the virtual light to control the vehicle.
In the technical solution for implementing the vehicle control method provided in the disclosure, after the image frame of a traffic light located in a forward direction of the vehicle is obtained, the virtual light corresponding to the traffic light may be obtained by using the aforementioned traffic light perception method and based on the image frame, and autonomous driving control is performed on the vehicle based on a color of each traffic indication direction of the virtual light. Through the above method, the status of the traffic light can be accurately obtained, thereby enabling safe and reliable autonomous driving control of the vehicle and improving the driving safety of the vehicle.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:

FIG. 1 is a schematic flowchart of main steps of a traffic light perception method according to an embodiment of the disclosure;
FIG. 2 is a schematic flowchart of main steps of a method for determining a color of a traffic indication direction according to an embodiment of the disclosure;
FIG. 3 is a schematic diagram of obtaining a color corresponding to a lamp head shape according to an embodiment of the disclosure;

FIG. 4 is a schematic diagram of a virtual light according to an embodiment of the disclosure;

FIG. 5 is a schematic flowchart of main steps of a vehicle control method according to an embodiment of the disclosure; and

FIG. 6 is a schematic diagram of a main structure of a computer device according to an embodiment of the disclosure.

## Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, "processor" may include hardware, software or a combination of both. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory.

The following describes an embodiment of a traffic light perception method provided in the disclosure.

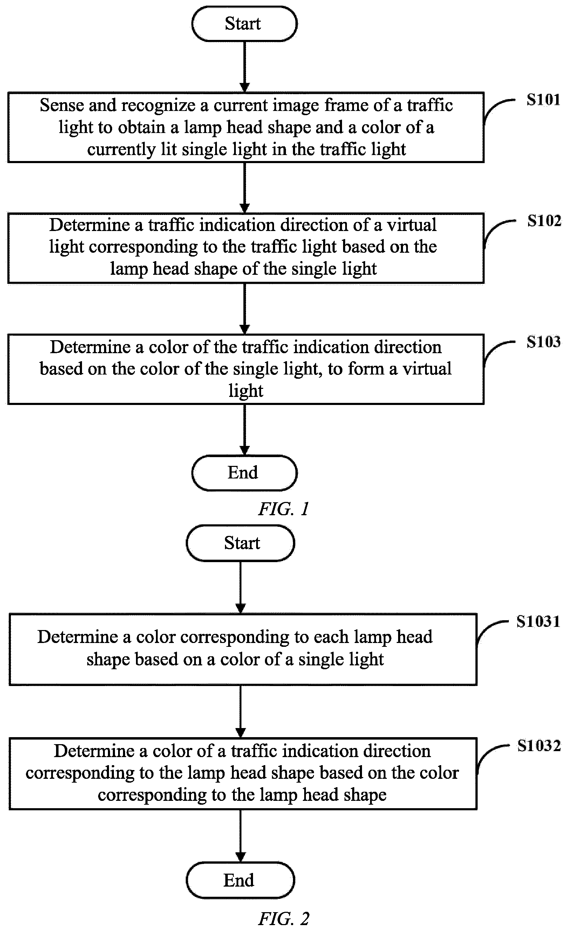

FIG. 1 is a schematic flowchart of main steps of a traffic light perception method according to an embodiment of the disclosure. As shown in FIG. 1, the traffic light perception method in this embodiment of the disclosure mainly includes step S101 to step S104 below.

In step S101, a current image frame of a traffic light is sensed and recognized to obtain a lamp head shape and a color of a currently lit single light in the traffic light.

The image frame may be obtained by collecting images of the traffic light through a visual sensor (such as a camera) on the vehicle. After obtaining this image frame, the image frame may be input into a preset perception model, and information such as a lamp head shape and a color of each single light in the image frame may be recognized through this perception model. This perception model can be constructed using a conventional method in the field of neural network technologies. The embodiments of the disclosure do not limit a specific structure and a training method of the perception model, as long as it has the ability to recognize the above information from the image frame.

A lit single light is a single light that shows a preset color. The preset color is a color that can guide traffic. For example, preset colors may include green, red, and yellow. Green indicates permission to pass, red indicates stop, and yellow indicates warning. By sensing and recognizing image frames, colors shown by a single light in one or more image frames can be obtained. If a color shown by a single light in one or more image frames is a preset color, it may be determined that the single light is lit. In addition, it should be noted that, in addition to the above preset colors that can guide traffic, the color of a single light may further include non-preset colors indicating that no traffic guidance is provided. For example, when the single light is turned off, it may show black.

The lamp head shape of the single light includes but is not limited to a round cake, a straight ahead arrow, a left-turn arrow, a right-turn arrow, a U-turn arrow, and the like.

In step S 102, a traffic indication direction of a virtual light corresponding to the traffic light is determined based on the lamp head shape of the single light.

Different lamp head shapes can represent different traffic indication directions. Therefore, the traffic indication direction of the virtual light corresponding to the traffic light can be determined based on lamp head shapes of all single lights in the traffic light. For example, if the traffic light includes three single lights and lamp head shapes of the three single lights are all round cakes, the traffic indication direction of the virtual light corresponding to the traffic light includes straight ahead, left turn, and U-turn.

It should be noted that those skilled in the art can flexibly set traffic indication directions represented by different lamp head shapes according to actual needs, which are not specifically limited in the embodiments of the disclosure. For example, if according to historical traffic rules, a round cake can represent two directions: straight ahead and left turn, but according to the latest traffic rules, a round cake can represent three directions: straight ahead, left turn, and U-turn. In this case, the traffic indication directions represented by the round cake may be adjusted to straight ahead, left turn, and U-turn.

In some embodiments, to accurately obtain the above traffic indication direction, a correspondence between a lamp head shape and a traffic indication direction of the virtual light can be set in advance. When the above traffic indication direction needs to be obtained, the preset correspondence between a lamp head shape and a traffic indication direction of the virtual light needs to be first obtained, and then, the traffic indication direction of the virtual light corresponding to the traffic light is determined based on the lamp head shape of the single light and the correspondence. It should be noted that the embodiments of the disclosure do not specifically limit a method for setting the above correspondence, as long as it can clearly indicate which traffic indication directions the lamp head shape corresponds to.

In step S 103, a color of the traffic indication direction is determined based on the color of the single light, to form a virtual light.

Through the method described in steps S 101 to S103 above, a traffic light at any position and of any type can be uniformly expressed as a virtual light formed through the fusion of the traffic indication direction and its color. When the vehicle is controlled, it only required to query a color of a corresponding traffic indication direction from the virtual lights, and then autonomous driving control can be performed for the corresponding traffic indication direction based on this color. In addition, in the above method, there is no need to label positions and types of traffic lights on a high-definition map in advance. This eliminates the reliance on the high-definition map, reduces the costs of labeling the high-definition map, also overcomes a prior-art problem that traffic lights can be sensed and recognized only in a region covered by high-definition maps, and it is difficult to accurately sense and recognize traffic lights when the information labeled on a high-definition map is inconsistent with actual information.

Step S 103 is further described below.

After determining the traffic indication direction represented by the lamp head shape of the single light, the color of the single light can represent the color of these traffic indication directions. For example, a color value can be assigned, based on a color of a single light, to a traffic indication direction represented by a lamp head shape of the single light. Specifically, referring to FIG. 2, a color of each traffic indication direction may be determined through the following step S 1031 and step S1032.

In step S 1031, a color corresponding to each lamp head shape is determined based on the color of the single light.

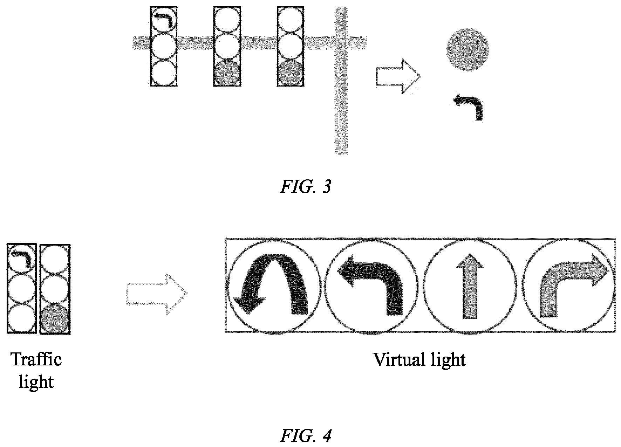

The traffic light may include a plurality of single lights, and each single light may have a same or different lamp head shape. In this step, the lamp head shape contained in the traffic light may be determined based on the lamp head shape of each single light, and then the color corresponding to each lamp head shape may be determined based on the color of each single light. As shown in FIG. 3, the traffic light contains three columns of single lights, each column of single lights contains three single lights, and each of these three columns of single lights contains one lit single light. According to the order from left to right in FIG. 3, the uppermost single light in the first column of single lights is a lit single light having a lamp head shape being a left-turn arrow, and the lowermost single lights in the second and third columns of single lights are lit single lights having a lamp head shape being a round cake. Based on lamp head shapes of these three single lights, it is determined that the traffic light contains two lamp head shapes: a left-turn arrow and a round cake. The color corresponding to the left-turn arrow is red, and the color corresponding to the round cake is green.

In step S1032, a color of a traffic indication direction corresponding to the lamp head shape is determined based on the color corresponding to the lamp head shape.

Specifically, the traffic indication direction represented by the lamp head shape is first determined, and then the color corresponding to the lamp head shape is used as the color of the corresponding traffic indication direction. Still referring to the example shown in FIG. 3, the color of the left-turn direction corresponding to the left-turn arrow is red, and the color of the three directions of straight ahead, left turn, and U-turn corresponding to the round cake is green.

Through the method described in step S1031 and step S1032, the color of each traffic indication direction can be quickly and accurately determined by using the lamp head shape of the single light.

Step S1031 and step S1032 will be further described below.

    1. Step S1031 is described.

There may be a plurality of lit single lights having a same lamp head shape in the traffic light. When performing color sensing and recognition of these single lights through step S101, these single lights may be recognized as different colors due to object reflection, poor ambient light, and the like, and this will cause different colors to appear in a same traffic indication direction, ultimately affecting the accuracy of the virtual light. In this regard, the colors of these single lights can be corrected to a same color through the following step 11 and step 12.

In step 11, single lights of the same shape that have the same lamp head shape and that are lit in the traffic light are obtained.

For example, a traffic light includes three lit single lights. One single light has a lamp head shape being a left-turn arrow, and the other two single lights have a lamp head shape being a round cake. Then the traffic light includes a group of single lights of the same shape that have a lamp head shape being a round cake. The group of single lights of the same shape includes two single lights.

In step 12, a color of each of the single lights of the same shape is corrected to the same color, to determine colors corresponding to the lamp head shapes of the single lights of the same shape.

Through the method described in step 11 and step 12 above, the color of a lit single light having a same lamp head shape in a same traffic light can be corrected to a same color to avoid confusion when determining the traffic indication direction of the virtual light and affecting the accuracy of the virtual light.

Step 12 is further described below.

A confidence level that a lit single light shows each different color may be used to select a color with the highest confidence level for correction, to improve the accuracy of color correction. Specifically, in some implementations, the color of each of the single lights of the same shape can be corrected through the following step 121 to step 123.

In step 121, for each of the single lights of the same shape, a confidence level that the single light shows each different color is obtained.

The confidence level of the color represents a degree of credibility of the color. When the color of a lit single light is sensed and recognized through step S101, the confidence level that the lit single light shows each different color can be obtained. For example, if a perception model constructed using a neural network is used for color sensing and recognition, the perception model may output a probability that a single light shows each color, and then use a color with a highest probability as a color of the single light, and a probability of each color may be used as the confidence level of each color.

In step 122, a color with a highest confidence level is selected from confidence levels that all of the single lights of the same shape show each different color.

For example, single lights of the same shape include single light 1 and single light 2, and the colors include green and red. The confidence levels that single light 1 shows green and red are 0.9 and 0.1 respectively. The confidence levels that single light 2 shows green and red are 0.4 and 0.6 respectively. 0.9 is the maximum value, so that green is selected.

In step 123, the color of each of the single lights of the same shape is corrected to the color with the highest confidence level. Still referring to the example above, the color of single light 2 is corrected to green.

Through the method described in step 121 to step 123 above, the confidence level of the color may be used to obtain an accurate color of the single lights of the same shape, thereby ensuring the accuracy of color correction.

The method for obtaining a confidence level that a single light shows each different color in step 121 is further described below.

According to the foregoing description, when the color of a single light is sensed and recognized through step S101, the confidence level that the single light shows each different color can be obtained. However, due to object reflection, poor ambient light, and the like, a color recognition result may be affected. That is, the confidence level of the color obtained through sensing and identification may be inaccurate. In this regard, in this embodiment of the disclosure, the confidence level of the color obtained through sensing and identification may be corrected first, and then the corrected confidence level may be used as a final confidence level. Specifically, in some implementations of this embodiment of the disclosure, the following step 1211 to step 1213 may be used to obtain the confidence level that the single light shows each different color.

In step 1211, an initial confidence level that the single light shows each different color and that is obtained by sensing and recognizing the current image frame of the traffic light is obtained.

In step 1212, an area of a detection box of the single light is obtained and/or an included angle between a direction in which a vehicle points to the single light and a Y-axis direction in a vehicle body coordinate system is obtained.

The detection box of the single light is a bounding box of the single light in the image frame. Through this bounding box, a 2D position of the single light on the image frame can be obtained.

A larger area of the detection box indicates a smaller distance from the single light to the vehicle in the forward direction of the vehicle and a larger number of image pixels contained, indicates a higher accuracy of color sensing and recognition of the single light, and indicates a higher accuracy of the confidence level of the color. Otherwise, the accuracy of the confidence level of the color is lower.

Similarly, a greater included angle between the direction in which the vehicle points to the single light and the Y-axis direction in the vehicle body coordinate system indicates a smaller distance from the single light to the vehicle in the forward direction of the vehicle, and indicates a larger possibility that the vehicle is about to pass the single light. Otherwise, a longer distance indicates a smaller possibility that the vehicle is about to pass the single light.

In step 1213, the initial confidence level of each different color is modified based on the area of the detection box and/or the included angle to obtain a final confidence level that the single light shows each color.

In this embodiment of the disclosure, the confidence level of a single light can be increased or decreased based on magnitude of the area of the detection box. For example, if a larger area of the detection box may indicate an increased confidence level of the color of the single light, and a smaller area may indicate a reduced confidence level of the color of the single light. In addition, in this embodiment of the disclosure, the area of the detection box may be used as a correction coefficient, a product of the initial confidence level and the correction coefficient may be calculated, and the product may be used as a final confidence level of the color of the single light.

In this embodiment of the disclosure, the confidence level of a single light can be increased or decreased based on magnitude of the included angle. For example, if a larger included angle may indicate an increased confidence level of the color of the single light, and a smaller included angle may indicate a reduced confidence level of the color of the single light. In addition, in this embodiment of the disclosure, the included angle may be used as a correction coefficient, a product of the initial confidence level and the correction coefficient may be calculated, and the product may be used as a final confidence level of the color of the single light.

In this embodiment of the disclosure, the confidence level of the color of a single light can be increased or decreased based on magnitude of both the area of the detection box and the included angle. For example, if a larger area of the detection box and a larger included angle may indicate an increased confidence level of the color of the single light, and a smaller area and a smaller included angle may indicate a reduced confidence level of the color of the single light. In addition, in this embodiment of the disclosure, the area of the detection box and the included angle may be used as a correction coefficient, a product of the initial confidence level and the correction coefficient may be calculated, and the product may be used as a final confidence level of the color of the single light.

In a preferred embodiment, the product of the area of the detection box and the included angle may be calculated and the product is used as a gain value. Based on the gain value, the initial confidence level of each different color is modified to obtain the final confidence level that the single light shows each color. That is, a product of the gain value and the initial confidence level is calculated and used as the final confidence level. A calculation formula of the final confidence level may be shown as the following formula (1).

$$p_f^i = p_m^i \times A \times \delta, i = 1, \dots, N \quad (1)$$

Meanings of various parameters in formula (1) are as follows:

$p_f^i$ indicates a final confidence level that a single light shows an $i$th color, $p_m^i$ indicates an initial confidence level that this single light shows the $i$th color, A indicates an area of a detection box of this single light, $\delta$ indicates an included angle between the direction in which the vehicle points to this single light and a Y-axis direction in a vehicle body coordinate system, and N indicates a type of the color.

A highest confidence level is selected, and a same normalization processing method is used for each single light to normalize a confidence level that each single light shows each color, to facilitate comparison of the confidence levels of different colors of the single light. Specifically, for a single light, the initial confidence level of each different color is corrected based on the area of the detection box. After the corrected confidence level of each different color is obtained, the corrected confidence level of each different color may be further normalized, and a result of normalization is used as the final confidence level of each different color.

For example, if the final confidence level shown in formula (1) needs to be normalized, the following formula (2) may be used to normalize a confidence level $p_f^i$ that the single light shows each color.

$$p_{nf}^i = p_f^i / \sum_{i=1}^N p_f^i \quad (2)$$

It should be noted that in this embodiment of the disclosure, a conventional data normalization method in the technical field of mathematics may be used to normalize the corrected confidence level of each different color. This is not specifically limited in this embodiment of the disclosure.

Through step 1211 to step 1213 above, the area of the detection box of the single light and/or "included angle between a direction in which a vehicle points to the single light and a Y-axis direction in a vehicle body coordinate system" may be used to correct the confidence level of the color that is obtained through sensing and recognition, thereby improving the accuracy of the confidence level of the color and ultimately improving the accuracy of color correction using the confidence level.

2. Step S 1032 is described.

Since different lamp head shapes may represent a same traffic indication direction, if colors corresponding to the two lamp head shapes are different, different colors will appear in a same traffic indication direction, ultimately affecting the accuracy of the virtual light. In this regard, when the color of each traffic indication direction is determined based on the color corresponding to the lamp head shape, an arrangement order of lamp head shapes may be set first, and then a color value is assigned to a traffic indication direction corresponding to each lamp head shape according to the arrangement order of lamp head shapes and based on the color corresponding to each lamp head shape, so as to determine a color of a traffic indication direction corresponding to each lamp head shape. In this way, even if there are different colors in a same traffic indication direction, the color may be determined by a last lamp head shape that represents the traffic indication direction, and there will be no confusion. In one embodiment, the lamp head shapes include a round cake, a straight ahead arrow, a left-turn arrow, a right-turn arrow, and a U-turn arrow. The arrangement order of the lamp head shapes is a right-turn arrow, a round cake, a straight ahead arrow, a left-turn arrow, and a U-turn arrow. The traffic indication directions represented by these lamp head shapes are shown in Table 1 below.

Table 1

| Arrangement order | Lamp head shape | Traffic indication directions |
| --- | --- | --- |
| 1 | Right-turn arrow | Right turn |
| 2 | Round cake | Straight ahead, left turn, and U-turn |
| 3 | Straight ahead arrow | Straight ahead, left turn, and U-turn |
| 4 | Left-turn arrow | Left turn and U-turn |
| 5 | U-turn arrow | U-turn |

In actual applications, according to the provisions of different traffic rules, when there is a right-turn direction, there may be rules that allow right turn by default. In this case, no single light may be disposed separately in a traffic light to indicate right turn. In this regard, in this embodiment of the disclosure, the color of the right-turn direction may be initialized to a color indicating permission to pass, and then the color of the traffic indication direction corresponding to each lamp head shape is determined according to the preset arrangement order of lamp head shapes.

As shown in FIG. 4, it is assumed that the traffic light contains two columns of single lights, each column of single lights contains three single lights, and each of these two columns of single lights contains one lit single light. The uppermost single light in one column of single lights is a lit single light showing red and having a lamp head shape being a left-turn arrow, and the lowermost single light in the other column of single is a lit single light showing green and having a lamp head shape being a round cake. At the same time, in the scenario shown in FIG. 4, since right turn is allowed by default, a single light of a right-turn arrow is not disposed.

According to Table 1, it can be learned that the left-turn arrow represents left turn and U-tum, and the round cake represents straight ahead, left turn, and U-turn. Therefore, the traffic indication direction of the virtual light includes left turn, U-tum, and straight ahead. In addition, since the traffic light allows right turn by default, the traffic indication direction of the virtual light further includes right turn. The color of the right-turn direction may be initialized to green indicating permission to pass. Then, according to the arrangement order of lamp head shapes shown in Table 1, straight ahead, left turn, and U-turn represented by the round cake are set to green, and then left turn and U-turn represented by the left-turn arrow are changed from green to red. Finally, in the virtual light, left turn and U-turn are red, and straight ahead and right turn are green.

The above is a description of the method for determining a color of a traffic indication direction in step S1032.

Further, to improve the accuracy of the above method for determining a color of a traffic indication direction, after the color corresponding to each lamp head shape is obtained through step S 1031, tracking and smoothing may be further performed on the color corresponding to each lamp head shape through the following step 21 to step 23, to prevent the color obtained in step S 1031 from being inaccurate and affecting the color of the traffic indication direction.

In step 21, a plurality of consecutive historical image frames before the current image frame are obtained.

To obtain the above historical image frames conveniently and accurately, a sliding window of a preset size may be set first, and then image frames are selected through sliding by using the sliding window according to the order of image frame collection moments, to obtain image frames that fall into the sliding window, and select a plurality of consecutive historical image frames before the current image frame from these image frames. Those skilled in the art can flexibly set a size of a sliding window according to actual needs, and this is not specifically limited in this embodiment of the disclosure. For example, the size of the sliding window may be 10 consecutive image frame collection moments.

In step 22, a color corresponding to a lamp head shape obtained through each of the historical image frames is obtained. The method for obtaining the color of the lamp head shape through historical image frames is the same as the method used for the current image frame, that is, the related method described in the foregoing method embodiment.

In step 23, a color corresponding to the lamp head shape obtained through each of the current image frame and the historical image frame is voted on, and a color with a largest number is selected as a final color corresponding to the lamp head shape obtained through the current image frame.

For example, for the lamp head shape of a round cake, the color obtained for the current image frame is green, and colors obtained for five consecutive historical image frames before the current image frame are all red, then the color obtained for the current image frame is corrected to red.

Through the method described in the above step 21 to step 23, it is possible to avoid a problem that the color obtained in step S 1031 is inaccurate due to interference when collecting image frames and other reasons, which ultimately affects the color of the traffic indication direction.

In some embodiments, after the color of each traffic indication direction is determined through the above method, tracking and smoothing are performed on the color of each traffic indication direction through the following step 31 to step 33, to further reduce the impact on the color of the traffic indication direction due to interference when collecting image frames and other reasons.

In step 31, a plurality of consecutive historical image frames before the current image frame are obtained.

The method of this step is similar to the method described in step 21, and details are not repeated here.

In step 32, the color of the traffic indication direction obtained through each of the historical image frames is obtained. The method for obtaining the color of the traffic indication direction through historical image frames is the same as the method used for the current image frame, that is, the related method described in the foregoing method embodiment.

In step 33, a color of the traffic indication direction obtained through each of the current image frame and the historical image frame is voted on, and a color with a largest number is selected as a color of the traffic indication direction obtained through the current image frame.

For example, for the traffic indication direction of straight ahead, the color obtained for the current image frame is green, and colors obtained for five consecutive historical image frames before the current image frame are all red, then the color obtained for the current image frame is corrected to red.

Through the method described in step 31 to step 33 above, a more accurate color of the traffic indication direction may be obtained, further improving the accuracy of the virtual light.

The above is a further description of step S103.

Further, in the embodiment of the traffic light perception method according to the disclosure, when the current image frame of the traffic light is sensed and recognized, in addition to a lamp head shape and a color of a currently lit single light in the traffic light, a 3D position of the single light may be further obtained. After the virtual light is formed through the method described in step S101 to step S103, the virtual light may be further associated with the 3D position of the single light.

The 3D position of the single light is a position of the single light in a preset three-dimensional coordinate system. For example, in one implementation, this three-dimensional coordinate system may be a vehicle body coordinate system of the vehicle. The following is a brief description of the method for obtaining a 3D position through sensing and recognition. Specifically, after the image frame of the traffic light is sensed, a 2D position of the single light in an image coordinate system may be obtained, and then the 2D position is transformed from the image coordinate system into the preset three-dimensional coordinate system through a coordinate system transformation method, to obtain the 3D position of the single light.

The intersection where the single light is located may be determined based on the 3D position of the single light. Associating the 3D position of the single light with the virtual light makes it possible that the 3D position of the single light can be used to represent a position of the virtual light, thereby determining the intersection where the virtual light is located. In this way, when the virtual light is used to perform autonomous driving control on the vehicle, the vehicle can be more accurately controlled to perform autonomous driving at the corresponding intersection.

The following describes an embodiment of a vehicle control method provided in the disclosure.

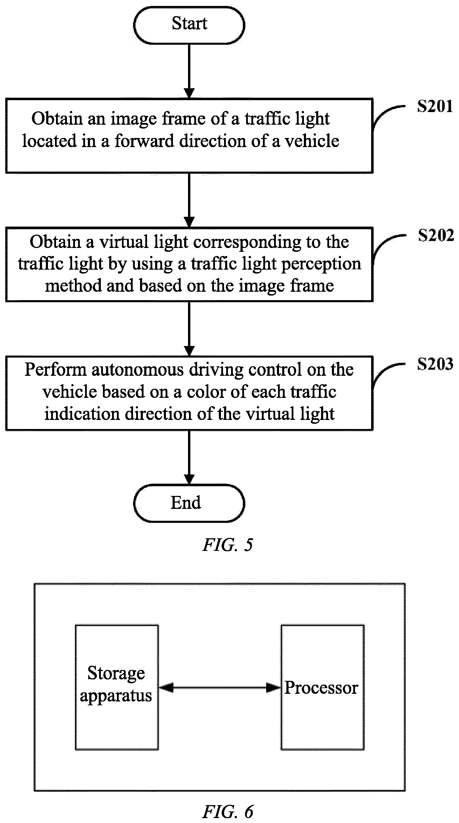

FIG. 5 is a schematic flowchart of main steps of a vehicle control method according to an embodiment of the disclosure. As shown in FIG. 5, the traffic light perception method in this embodiment of the disclosure mainly includes step S201 to step S203 below.

In step S201, an image frame of a traffic light located in a forward direction of a vehicle is obtained.

Specifically, the image frame of the traffic light may be collected by using a visual sensor that is installed on the vehicle and that has a field of view being the forward direction of the vehicle.

In step S202, a virtual light corresponding to the traffic light is obtained by using a traffic light perception method and based on the image frame.

The traffic light perception method in this step is the traffic light perception method described in the foregoing method embodiment.

In step S203, autonomous driving control is performed on the vehicle based on a color of each traffic indication direction of the virtual light.

Specifically, based on the color of the traffic indication direction, it may be determined whether each traffic indication direction permits passing, and autonomous driving control is performed on the vehicle based on a determining result. For example, the vehicle is traveling in a left lane of a road, the left lane is an all-purpose road that allows left turn and straight ahead, and the traveling purpose of the vehicle is to turn left. In this case, the color of the left-turn direction in the virtual light may be obtained. If the color is red, the vehicle is controlled to stop and wait behind a stop line. If the color is green, the vehicle is controlled to turn left.

Through the method described in the above step S201 to step S203, the status of the traffic light can be accurately obtained, thereby enabling safe and reliable autonomous driving control of the vehicle and improving the driving safety of the vehicle.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders. These adjusted solutions and the technical solutions described in the disclosure are equivalent technical solutions and shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program code, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a computer device.

FIG. 6 is a schematic diagram of a main structure of an embodiment of a computer device according to the disclosure. As shown in FIG. 6, the computer device in this embodiment of the disclosure mainly includes a storage apparatus and a processor. The storage apparatus may be configured to store a program for executing the traffic light perception method or the vehicle control method in the foregoing embodiment of the method. The processor may be configured to execute a program in the storage apparatus. The program includes, but is not limited to, the program for executing the traffic light perception method or the vehicle control method in the foregoing embodiment of the method. For ease of description, only parts related to the embodiments of the disclosure are shown. For specific technical details that are not disclosed, reference may be made to the method part of the embodiments of the disclosure.

The computer device in this embodiment of the disclosure may be a control device formed by various electronic devices. In some possible implementations, the computer device may include a plurality of storage apparatuses and a plurality of processors. The program for executing the traffic light perception method or the vehicle control method in the foregoing embodiment of the method may be divided into a plurality of subprograms, and each subprogram can be loaded and run by the processor to perform different steps of the traffic light perception method or the vehicle control method in the foregoing embodiment of the method. Specifically, each subprogram may be stored in a different storage apparatus, and each processor may be configured to execute programs in one or more storage apparatuses to jointly implement the traffic light perception method or the vehicle control method in the foregoing embodiment of the method, that is, each processor separately performs different steps of the traffic light perception method or the vehicle control method in the foregoing embodiment of the method to jointly implement the traffic light perception method or the vehicle control method in the foregoing embodiment of the method.

The plurality of processors may be processors deployed on a same device. For example, the computer device may be a high-performance device including a plurality of processors, and the plurality of processors may be processors configured on the high-performance device. In addition, the foregoing plurality of processors may be alternatively processors deployed on different devices.

Further, the disclosure further provides a computer-readable storage medium.

In an embodiment of the computer-readable storage medium according to the disclosure, the computer-readable storage medium may be configured to store a program that causes the traffic light perception method or the vehicle control method in the foregoing embodiment of the method to be carried out, and the program may be loaded and run by a processor to implement the above traffic light perception method or the above vehicle control method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle.

In an embodiment of the vehicle according to the disclosure, the vehicle may include the computer device described in the above embodiment of the computer device. In this embodiment, the vehicle may be a self-driving vehicle, an unmanned vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

Heretofore, the technical solutions of the disclosure have been described with reference to an implementation shown in the accompanying drawings. However, it would have been readily understood by those skilled in the art that the scope of protection of the disclosure is obviously not limited to these specific implementations. Those skilled in the art may make equivalent changes or substitutions to the related technical features without departing from the principle of the disclosure, and all the technical solutions with such changes or substitutions shall fall within the scope of protection of the disclosure.

**Claims**

1. A traffic light perception method, wherein the method comprises:

   sensing and recognizing a current image frame of a traffic light to obtain a lamp head shape and a color of a currently lit single light in the traffic light;
   determining a traffic indication direction of a virtual light corresponding to the traffic light based on the lamp head shape of the single light; and
   determining a color of the traffic indication direction based on the color of the single light, to form a virtual light.

2. The traffic light perception method according to claim 1, wherein the step of "determining a color of the traffic indication direction based on the color of the single light, to form a virtual light" comprises:

   determining a color corresponding to each lamp head shape based on the color of the single light; and
   determining a color of a traffic indication direction corresponding to the lamp head shape based on the color corresponding to the lamp head shape.

3. The traffic light perception method according to claim 2, wherein the step of "determining a color corresponding to each lamp head shape based on the color of the single light" comprises:

   obtaining single lights of the same shape that have the same lamp head shape and that are lit in the traffic light; and
   correcting a color of each of the single lights of the same shape to the same color, to determine colors corresponding to the lamp head shapes of the single lights of the same shape.

4. The traffic light perception method according to claim 3, wherein the step of "correcting a color of each of the single lights of the same shape to the same color, to determine colors corresponding to the lamp head shapes of the single lights of the same shape" comprises:

   obtaining, for each of the single lights of the same shape, a confidence level that the single light shows each different color;
   selecting a color with the highest confidence level from confidence levels that all of the single lights of the same shape show each different color; and
   correcting the color of each of the single lights of the same shape to the color with the highest confidence level.

5. The traffic light perception method according to claim 4, wherein the step of "obtaining, for each of the single lights of the same shape, a confidence level that the single light shows each different color" comprises:

   obtaining an initial confidence level that the single light shows each different color and that is obtained by sensing and recognizing the current image frame of the traffic light;
   obtaining an area of a detection box of the single light and/or obtaining an included angle between a direction in which a vehicle points to the single light and a Y-axis direction in a vehicle body coordinate system; and
   modifying, based on the area of the detection box and/or the included angle, the initial confidence level of each different color to obtain a final confidence level that the single light shows each color.

6. The traffic light perception method according to claim 5, wherein the method further comprises obtaining the final confidence level based on the area of the detection box and the included angle in the following manner:

   calculating a product of the area of the detection box and the included angle and using the product as a gain value; and
   modifying, based on the gain value, the initial confidence level of each different color to obtain the final confidence level that the single light shows each color.

7. The traffic light perception method according to any one of claims 2 to 6, wherein before the step of "determining a color of a traffic indication direction corresponding to the lamp head shape based on the color corresponding to the lamp head shape", the method further comprises: performing, in the following manner, tracking and smoothing on a color corresponding to a lamp head shape obtained through the current image frame:

obtaining a plurality of consecutive historical image frames before the current image frame;
obtaining a color corresponding to a lamp head shape obtained through each of the historical image frames; and
voting on a color corresponding to the lamp head shape obtained through each of the current image frame and the historical image frame, and selecting a color with a largest number as a final color corresponding to the lamp head shape obtained through the current image frame.

8.  The traffic light perception method according to any one of claims 2 to 7, wherein the step of "determining a color of a traffic indication direction corresponding to the lamp head shape based on the color corresponding to the lamp head shape" comprises:
assigning a color value to a traffic indication direction corresponding to each lamp head shape according to a preset arrangement order of lamp head shapes and based on the color corresponding to each lamp head shape, so as to determine a color of a traffic indication direction corresponding to each lamp head shape.

9.  The traffic light perception method according to claim 8, wherein before the step of "assigning a color value to a traffic indication direction corresponding to each lamp head shape according to a preset arrangement order of lamp head shapes and based on the color corresponding to each lamp head shape, so as to determine a color of a traffic indication direction corresponding to each lamp head shape", the method further comprises:
initializing a color of a right-turn traffic indication direction to a color that indicates permission to pass.

10. The traffic light perception method according to any one of claims 1 to 9, wherein after the step of "determining a color of the traffic indication direction based on the color of the single light, to form a virtual light", the method further comprises: performing, in the following manner, tracking and smoothing on a color of the traffic indication direction obtained through the current image frame:

obtaining a plurality of consecutive historical image frames before the current image frame;
obtaining the color of the traffic indication direction obtained through each of the historical image frames; and
voting on a color of the traffic indication direction obtained through each of the current image frame and the historical image frame, and selecting a color with a largest number as a color of the traffic indication direction obtained through the current image frame.

11. The traffic light perception method according to any one of claim 1 to 10, wherein the step of "determining a traffic indication direction of a virtual light corresponding to the traffic light based on the lamp head shape of the single light" comprises:

obtaining a preset correspondence between a lamp head shape and a traffic indication direction of a virtual light; and
determining the traffic indication direction of the virtual light corresponding to the traffic light based on the lamp head shape of the single light and the correspondence.

12. The traffic light perception method according to any one of claim 1 to 10, wherein after the step of "determining a color of the traffic indication direction based on the color of the single light, to form a virtual light", the method further comprises:

obtaining a 3D position of the currently lit single light in the traffic light obtained by sensing and recognizing the current image frame of the traffic light; and
associating the virtual light with the 3D position.

13. A computer device, comprising a processor and a storage apparatus adapted to store a plurality of pieces of program code, wherein the pieces of program code are adapted to be loaded and run by the processor to perform a traffic light perception method according to any one of claims 1 to 12.

14. A non-transitory computer-readable storage medium storing a plurality of pieces of program code, wherein the pieces of program code are adapted to be loaded and run by a processor to perform a traffic light perception method according to any one of claims 1 to 12.

**15.** A vehicle, comprising a computer device according to claim 14.

Start

Sense and recognize a current image frame of a traffic
light to obtain a lamp head shape and a color of a
currently lit single light in the traffic light — S101

Determine a traffic indication direction of a virtual
light corresponding to the traffic light based on the
lamp head shape of the single light — S102

Determine a color of the traffic indication direction
based on the color of the single light, to form a virtual
light — S103

End

*FIG. 1*

Start

Determine a color corresponding to each lamp head
shape based on a color of a single light — S1031

Determine a color of a traffic indication direction
corresponding to the lamp head shape based on the color
corresponding to the lamp head shape — S1032

End

*FIG. 2*

*FIG. 3*

Traffic
light

Virtual light

*FIG. 4*

Start

Obtain an image frame of a traffic light located in a forward direction of a vehicle — S201

Obtain a virtual light corresponding to the traffic light by using a traffic light perception method and based on the image frame — S202

Perform autonomous driving control on the vehicle based on a color of each traffic indication direction of the virtual light — S203

End

*FIG. 5*

Storage apparatus ◄──► Processor

*FIG. 6*

Europäisches
Patentamt

European
Patent Office

Office européen
des brevets

## EUROPEAN SEARCH REPORT

Application Number

EP 24 15 1799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 442 487 B1 (FERGUSON DAVID IAN FRANKLIN [US] ET AL) 13 September 2016 (2016-09-13) * the whole document * | 1-15 | INV. G06V10/56 G06V20/58 G08G1/0962 |
| A | EP 3 842 996 A1 (YANDEX SELF DRIVING GROUP LLC [RU]) 30 June 2021 (2021-06-30) * the whole document * | 1-15 | |
| A | US 2020/133283 A1 (HIRANO KOTA [JP] ET AL) 30 April 2020 (2020-04-30) * the whole document * | 1-15 | |

TECHNICAL FIELDS
SEARCHED (IPC)

G06V
G08G

The present search report has been drawn up for all claims

| Place of search | Date of completion of the search | Examiner |
|---|---|---|
| The Hague | 4 June 2024 | de Bont, Emma |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 1799

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2024

| Patent document cited in search report | | Publication date | Patent family member(s) | | Publication date |
|---|---|---|---|---|---|
| US 9442487 | B1 | 13-09-2016 | US 9442487 B1 | | 13-09-2016 |
| | | | US 9690297 B1 | | 27-06-2017 |
| EP 3842996 | A1 | 30-06-2021 | EP 3842996 A1 | | 30-06-2021 |
| | | | US 2021201058 A1 | | 01-07-2021 |
| US 2020133283 | A1 | 30-04-2020 | JP 7172441 B2 | | 16-11-2022 |
| | | | JP 2020067896 A | | 30-04-2020 |
| | | | US 2020133283 A1 | | 30-04-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310169608